(19) Europäisches Patentamt
European Patent Office
Office européen des brevets

(11) **EP 3 744 776 A1**

(12) **EUROPEAN PATENT APPLICATION**

(43) Date of publication:
**02.12.2020 Bulletin 2020/49**

(51) Int Cl.:
***C08L 7/00** (2006.01)* ***B60C 1/00** (2006.01)*
***B60C 11/00** (2006.01)*

(21) Application number: **20172343.4**

(22) Date of filing: **30.04.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.05.2019 JP 2019102670**
**10.02.2020 JP 2020020587**

(71) Applicant: **Sumitomo Rubber Industries, Ltd.**
**Kobe-shi, Hyogo 651-0072 (JP)**

(72) Inventors:
- **YOSHIOKA, Mikako**
  **Kobe-shi, Hyogo 651-0072 (JP)**
- **KOTA, Tomita**
  **Kobe-shi, Hyogo 651-0072 (JP)**
- **ITO, Hiroshi**
  **Kobe-shi, Hyogo 651-0072 (JP)**
- **ISHINO, Soh**
  **Kobe-shi, Hyogo 651-0072 (JP)**

(74) Representative: **TBK**
**Bavariaring 4-6**
**80336 München (DE)**

(54) **RUBBER COMPOSITION FOR TIRE**

(57) Provided are a rubber composition, for a tire, which allows combined performance of on-ice performance and wear resistance to be improved, and a tire in which the rubber composition is used. The rubber composition for a tire contains: a rubber component containing an isoprene-based rubber and a conjugated diene-based polymer; and water-soluble particles, and the water-soluble particles satisfy the following formula (I),

$$D50 \leq 30 \qquad (I)$$

(D50 in formula (I) represents a median particle size ($\mu$m) of the water-soluble particles.).

**FIG. 1**

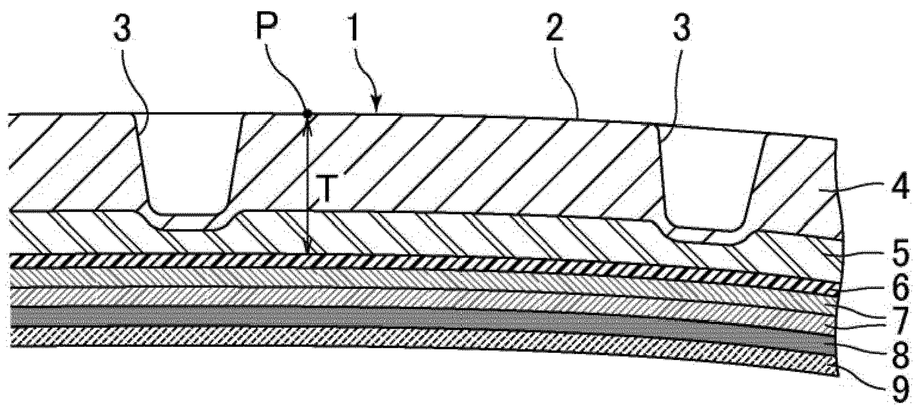


EP 3 744 776 A1

## Description

### BACKGROUND OF THE INVENTION

#### Field of the Invention

The present invention relates to a rubber composition for a tire and a tire in which the rubber composition is used.

#### Description of the Background Art

For running on an ice and snow road surface, spike tires have been used or chains have been mounted to tires. However, an environmental problem such as a dust problem occurs with such means, and thus studless tires have been proposed as an alternative to the said means. Studless tires are used on an ice and snow road surface having larger irregularities compared to a general road surface and thus are devised in terms of material and design, and a rubber composition in which a diene-based rubber having excellent low temperature properties is blended, a rubber composition in which a large amount of a softener is blended in order to enhance a softening effect, etc., have been developed (see Japanese Laid-Open Patent Publication No. 2009-091482, etc.).

For example, as a means for improving the on-ice performance of a studless tire, it is conceivable to increase the amount of a butadiene rubber. However, when the amount of the butadiene rubber is excessively increased, mobility in rubber becomes high and blooming of various chemicals occurs. Thus, there is a limit to increasing the amount of the butadiene rubber. In addition, when the amount of the butadiene rubber is increased, the ratio of a natural rubber is decreased accordingly. Thus, there is also a problem that the strength of the rubber becomes insufficient and wear resistance deteriorates.

As other methods, a method of adding a filler such as a zinc oxide whisker (see Japanese Laid-Open Patent Publication No. 2005-53977), a method of adding short fibers (see Japanese Laid-Open Patent Publication No. 2002-249619), etc., have also been proposed. However, the methods are concerned with a decrease in wear resistance and cannot be considered as sufficient methods for improving on-ice performance, and there is still room for improvement. As described above, further improvement is desired in achieving both on-ice performance and wear resistance while inhibiting blooming of chemicals.

### SUMMARY OF THE INVENTION

The present invention has been made in view of the above circumstances, and an object of the present invention is to provide a rubber composition, for a tire, which allows combined performance of on-ice performance and wear resistance to be improved, and a tire in which the rubber composition is used.

The present invention is directed to a rubber composition for a tire, containing: a rubber component containing an isoprene-based rubber and a conjugated diene-based polymer; and water-soluble particles, wherein the water-soluble particles satisfy the following formula (I).

$$D50 \leq 30 \qquad (I)$$

(D50 in formula (I) represents a median particle size ($\mu$m) of the water-soluble particles.)

The water-soluble particles preferably satisfy a relationship of the following formula (II).

$$A/D50 \geq 0.5 \qquad (II)$$

(A in formula (II) represents an amount (parts by mass) of the water-soluble particles per 100 parts by mass of the rubber component. D50 represents the median particle size ($\mu$m) of the water-soluble particles.)

An amount of the water-soluble particles per 100 parts by mass of the rubber component is preferably not less than 10 parts by mass and more preferably not less than 25 parts by mass.

Preferably, an amount of the isoprene-based rubber in 100% by mass of the rubber component is not less than 20% by mass, an amount of the conjugated diene-based polymer in 100% by mass of the rubber component is not less than 20% by mass, and a silica content in 100% by mass of a total amount of silica and carbon black is not less than 50% by mass.

An amount of a liquid plasticizer per 100 parts by mass of the rubber component is preferably not greater than

30 parts by mass.

The conjugated diene-based polymer preferably includes a conjugated diene-based polymer having a cis content not less than 90% by mass.

The median particle size of the water-soluble particles is preferably not less than 10 μm.

Preferably, the rubber component further contains a styrene-butadiene rubber, and an amount of the styrene-butadiene rubber per 100 parts by mass of the rubber component is not less than the amount of the water-soluble particles per 100 parts by mass of the rubber component.

Preferably, the rubber composition further contains particulate silica having a nitrogen adsorption specific surface area not less than 180 $m^2/g$, and an amount of the particulate silica per 100 parts by mass of the rubber component is not less than the amount of the water-soluble particles per 100 parts by mass of the rubber component.

Preferably, the rubber composition further contains a resin, and an amount of the resin per 100 parts by mass of the rubber component is not less than the amount of the water-soluble particles per 100 parts by mass of the rubber component.

Preferably, the rubber composition further contains a resin, and the resin is at least one resin selected from the group consisting of terpene-based resins, C5-based resins, and C9-based resins.

The present invention is also directed to a tire including a member produced by using the rubber composition.

The tire is preferably a winter tire.

The member is preferably a tread.

The tread preferably has a maximum thickness not less than 5.5 mm.

According to the present invention, combined performance of on-ice performance and wear resistance can be improved since the rubber composition for a tire contains: a rubber component containing an isoprene-based rubber and a conjugated diene-based polymer; and water-soluble particles, and the water-soluble particles satisfy the following formula (I).

$$D50 \leq 30 \qquad (I)$$

(D50 in formula (I) represents a median particle size (μm) of the water-soluble particles.)

BRIEF DESCRIPTION OF THE DRAWINGS

FIG. 1 is a cross-sectional view showing an area around a tread of a tire.

DESCRIPTION OF THE PREFERRED EMBODIMENTS

The rubber composition for a tire according to the present invention contains: a rubber component containing an isoprene-based rubber and a conjugated diene-based polymer; and water-soluble particles, and the median particle size of the water-soluble particles satisfy a predetermined relationship. The rubber composition can improve combined performance of on-ice performance and wear resistance.

The reason why such an advantageous effect is achieved is not clear but is inferred as described below.

Studless tires are required to have on-ice grip performance. When water-soluble particles are blended in order to achieve this performance, the water-soluble particles are dissolved by the moisture on a road surface to form voids, an edge effect due to the voids is obtained, and a water film can be removed. Moreover, when particles having a median particle size not greater than a predetermined value are used as the water-soluble particles, the number of edges of voids formed by dissolving the water-soluble particles is increased, so that the edge effect and the water film removing effect are greater, and excellent on-ice performance is achieved. In addition, when the median particle size of the water-soluble particles is not greater than the predetermined value, the water-soluble particles are less likely to become fracture origins, and the decrease in wear resistance is reduced. Due to these facts, it is inferred that excellent on-ice performance improvement can be achieved and good wear resistance is also achieved, so that combined performance of on-ice performance and wear resistance is improved.

Furthermore, as another effect, since the water-soluble particles react with moisture, the water-soluble particles can inhibit adhesion of water to metal cords inside a tire. When the particles having a median particle size not greater than the predetermined value are used, this inhibition effect can be enhanced since the specific surface area is larger as a whole when the particle size is smaller.

(Rubber Component)

The rubber composition contains a rubber component containing an isoprene-based rubber and a conjugated diene-based polymer.

Examples of the isoprene-based rubber include natural rubber (NR), isoprene rubber (IR), reformed NR, modified NR, and modified IR. As the NR, NRs that are generally used in the tire industry, such as SIR20, RSS#3, and TSR20, can be used. As the IR, IRs that are generally used in the tire industry, such as IR2200, can be used. Examples of the reformed NR include deproteinized natural rubber (DPNR) and ultra-pure natural rubber (UPNR), examples of the modified NR include epoxidized natural rubber (ENR), hydrogenated natural rubber (HNR), and grafted natural rubber, and examples of the modified IR include epoxidized isoprene rubber, hydrogenated isoprene rubber, and grafted isoprene rubber. These rubbers may be used individually, or two or more of these rubbers may be used in combination.

From the viewpoint of combined performance of on-ice performance and wear resistance, the amount of the isoprene-based rubber in 100% by mass of the rubber component is preferably not less than 20% by mass and more preferably not less than 30% by mass. The upper limit of the amount is not particularly limited, but the amount is preferably not greater than 80% by mass, more preferably not greater than 60% by mass, and further preferably not greater than 50% by mass.

As the conjugated diene-based polymer, for example, a polymer having repeating units derived from at least one monomer selected from the group consisting of 1,3-butadiene, isoprene, 2,3-dimethyl-1,3-butadiene, 1,3-pentadiene, 1,3-hexadiene, and myrcene can be used. Particularly, a polymer having repeating units derived from at least one monomer selected from the group consisting of 1,3-butadiene, isoprene, and 2,3-dimethyl-1,3-butadiene is suitable for use. That is, in one preferred embodiment, a conjugated diene compound that forms the conjugated diene-based polymer is at least one conjugated diene compound selected from the group consisting of 1,3-butadiene, isoprene, and 2,3-dimethyl-1,3-butadiene. Among them, the conjugated diene-based polymer is particularly preferably a butadiene rubber (BR).

The BR is not particularly limited, and examples of the BR include BRs that are generally used in the tire industry, such as a BR having a high cis content, a BR containing 1,2-syndiotactic polybutadiene crystal (SPB-containing BR), a butadiene rubber synthesized by using a rare earth element catalyst (rare earth BR), and a tin-modified butadiene rubber (tin-modified BR) modified with a tin compound. As for the BR, as commercially available products, products of Ube Industries, Ltd., JSR Corporation, Asahi Kasei Corporation, Zeon Corporation, etc., can be used. These BRs can be used individually, or two or more of these BRs may be used in combination.

The cis content of the conjugated diene-based polymer is preferably not less than 80% by mass, more preferably not less than 85% by mass, further preferably not less than 90% by mass, and particularly preferably not less than 95% by mass. Accordingly, better on-ice performance is achieved. As described above, the conjugated diene-based polymer particularly preferably includes a conjugated diene-based polymer having a cis content not less than 90% by mass, and, for example, in one preferred embodiment, the conjugated diene-based polymer includes a conjugated diene-based polymer having a cis content not less than 90% by mass and a conjugated diene-based polymer having a cis content less than 90% by mass.

In the present specification, the cis content (the amount of cis-1,4-bonds) is a value calculated from signal intensity measured by infrared absorption spectrum analysis or NMR analysis.

From the viewpoint of combined performance of on-ice performance and wear resistance, the amount of the conjugated diene-based polymer in 100% by mass of the rubber component is preferably not less than 10% by mass, more preferably not less than 20% by mass, further preferably not less than 30% by mass, and still further preferably not less than 45% by mass. In addition, the upper limit of the amount is not particularly limited, but the amount is preferably not greater than 90% by mass, more preferably not greater than 80% by mass, and further preferably not greater than 70% by mass.

As the conjugated diene-based polymer, any of an unmodified conjugated diene-based polymer and a modified conjugated diene-based polymer can be used.

As the modified conjugated diene-based polymer, a conjugated diene-based polymer having a functional group that interacts with a filler such as silica, etc., can be used. Examples of such a modified conjugated diene-based polymer include a terminal-modified conjugated diene-based polymer obtained by modifying at least one terminal of a conjugated diene-based polymer with a compound (modifier) having the functional group (a terminal-modified conjugated diene-based polymer having the functional group at a terminal thereof), a main chain-modified conjugated diene-based polymer having the functional group in the main chain thereof, a main chain/terminal-modified conjugated diene-based polymer having the functional group in the main chain and at a terminal thereof (for example, a main chain/terminal-modified conjugated diene-based polymer that has the functional group in the main chain thereof and in which at least one terminal thereof is modified with the modifier), and a terminal-modified conjugated diene-based polymer that is modified (coupled) by using a multifunctional compound having two or more epoxy groups in the molecule thereof and to which a hydroxyl group or an epoxy group is introduced.

Examples of the above-described functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. These functional groups may have a substituent. Among them, an amino group (preferably, an amino group obtained by substituting a hydrogen atom of an amino group with an alkyl group having 1 to 6 carbon atoms), an alkoxy group (preferably, an alkoxy group having 1 to 6 carbon atoms), and an alkoxysilyl group (preferably, an alkoxysilyl group having 1 to 6 carbon atoms) are preferable.

For example, a conjugated diene-based polymer modified with a compound (modifier) represented by the following formula, etc., is suitable for use as the modified conjugated diene-based polymer.

[Chem. 1]

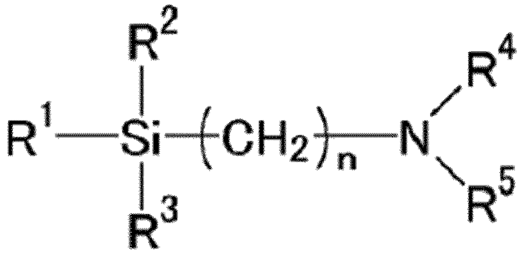

In the above formula, $R^1$, $R^2$, and $R^3$ are the same or different from each other, and each represent an alkyl group, an alkoxy group, a silyloxy group, an acetal group, a carboxyl group (-COOH), a mercapto group (-SH), or a derivative thereof. $R^4$ and $R^5$ are the same or different from each other, and each represent a hydrogen atom or an alkyl group. $R^4$ and $R^5$ may be linked together to form a ring structure together with a nitrogen atom. "n" represents an integer.

As the modified conjugated diene-based polymer modified with the compound (modifier) represented by the above formula, a BR obtained by modifying the polymerization terminals (active terminals) of a solution-polymerized butadiene rubber with the compound represented by the above formula, etc., is suitably used.

As $R^1$, $R^2$, and $R^3$, an alkoxy group is suitable (an alkoxy group preferably having 1 to 8 carbon atoms, more preferably 1 to 4 carbon atoms). As $R^4$ and $R^5$, an alkyl group (preferably, an alkyl group having 1 to 3 carbon atoms) is suitable. The integer "n" is preferably 1 to 5, more preferably 2 to 4, and further preferably 3. In addition, when $R^4$ and $R^5$ are linked together to form a ring structure together with a nitrogen atom, a four to eight-membered ring is preferably formed. Examples of the alkoxy group include cycloalkoxy groups (a cyclohexyloxy group, etc.) and aryloxy groups (a phenoxy group, a benzyloxy group, etc.).

Specific examples of the modifier include 2-dimethylaminoethyl trimethoxysilane, 3-dimethylaminopropyl trimethoxysilane, 2-dimethylaminoethyl triethoxysilane, 3-dimethylaminopropyl triethoxysilane, 2-diethylaminoethyl trimethoxysilane, 3-diethylaminopropyl trimethoxysilane, 2-diethylaminoethyl triethoxysilane, and 3-diethylaminopropyl triethoxysilane. Among them, 3-dimethylaminopropyl trimethoxysilane, 3-dimethylaminopropyl triethoxysilane, and 3-diethylaminopropyl trimethoxysilane are preferable. These compounds may be used individually, or two or more of these compounds may be used in combination.

As the modified conjugated diene-based polymer, a modified conjugated diene-based polymer modified with the following compound (modifier) is also suitable for use. Examples of the modifier include: polyglycidyl ethers of polyhydric alcohols, such as ethylene glycol diglycidyl ether, glycerin triglycidyl ether, trimethylolethane triglycidyl ether, and trimethylolpropane triglycidyl ether; polyglycidyl ethers of aromatic compounds having two or more phenol groups, such as diglycidylated bisphenol A; polyepoxy compounds such as 1,4-diglycidylbenzene, 1,3,5-triglycidylbenzene, and polyepoxylated liquid polybutadiene; epoxy group-containing tertiary amines such as 4,4'-diglycidyl-diphenylmethylamine and 4,4'-diglycidyl-dibenzylmethylamine; diglycidylamino compounds such as diglycidylaniline, N,N'-diglycidyl-4-glycidyloxy aniline, diglycidyl orthotoluidine, tetraglycidyl meta-xylenediamine, tetraglycidylaminodiphenylmethane, tetraglycidyl-p-phenylenediamine, diglycidylaminomethylcyclohexane, and tetraglycidyl-1,3,-bisaminomethylcyclohexane; amino group-containing acid chlorides such as bis-(1-methylpropyl)carbamic acid chloride, 4-morpholinecarbonyl chloride, 1-pyrrolidinecarbonyl chloride, N,N-dimethylcarbamic acid chloride, and N,N-diethylcarbamic acid chloride; epoxy group-containing silane compounds such as 1,3-bis-(glycidyloxypropyl)-tetramethyldisiloxane and (3-glycidyloxypropyl)-pentamethyldisiloxane;
sulfide group-containing silane compounds such as (trimethylsilyl)[3-(trimethoxysilyl)propyl]sulfide, (trimethylsilyl)[3-(triethoxysilyl)propyl]sulfide, (trimethylsilyl)[3-(tripropoxysilyl)propyl]sulfide, (trimethylsilyl)[3-(tributoxysilyl)propyl]sulfide, (trimethylsilyl)[3-(methyldimethoxysilyl)propyl]sulfide, (trimethylsilyl)[3-(methyldiethoxysilyl)propyl]sulfide, (trimethylsilyl)[3-(methyldipropoxysilyl)propyl]sulfide, and (trimethylsilyl)[3-(methyldibutoxysilyl)propyl] sulfide;
N-substituted aziridine compounds such as ethyleneimine and propyleneimine; alkoxysilanes such as methyltriethoxysilane; (thio)benzophenone compounds having an amino group and/or a substituted amino group, such as 4-N,N-dimethylaminobenzophenone, 4-N,N-dit-butylaminobenzophenone, 4-N,N-diphenylaminobenzophenone, 4,4'-bis(dimethylamino)benzophenone, 4,4'-bis(diethylamino)benzophenone, 4,4'-bis(diphenylamino)benzophenone, and N,N,N',N'-bis-(tetraethylamino)benzophenone; benzaldehyde compounds having an amino group and/or a substituted amino group, such as 4-N,N-dimethylaminobenzaldehyde, 4-N,N-diphenylaminobenzaldehyde, and 4-N,N-divinylaminobenzaldehyde; N-substituted pyrrolidones such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone; N-substituted piperidones such as N-methyl-2-piperidone, N-vinyl-2-piperidone, and N-phenyl-2-piperidone; N-substituted lactams such as N-methyl-ε-caprolactam, N-phenyl-ε-caprolactam, N-methyl-ω-laurolactam, N-vinyl-ω-laurolactam, N-methyl-β-propiolactam, and N-phenyl-β-propiolactam; and moreover,
N,N-bis-(2,3-epoxypropoxy)-aniline, 4,4-methylene-bis-(N,N-glycidylaniline), tris-(2,3-epoxypropyl)-1,3,5-triazine-2,4,6-triones, N,N-diethylacetamide, N-methylmaleimide, N,N-diethyl urea, 1,3-dimethylethylene urea, 1,3-divinylethylene urea, 1,3-diethyl-2-imidazolidinone, 1-methyl-3-ethyl-2-imidazolidinone, 4-N,N-dimethylaminoacetophenone, 4-N,N-diethylaminoacetophenone, 1,3-bis(diphenylamino)-2-propanone, and 1,7-bis(methylethylamino)-4-heptanone. Among them, modified conjugated diene-based polymers modified with alkoxysilanes are preferable.

Modification with the above compounds (modifiers) can be carried out by a known method.

The total amount of the isoprene-based rubber and the conjugated diene-based polymer in 100% by mass of the rubber component in the rubber composition is preferably not less than 30% by mass, more preferably not less than 60% by mass, and further preferably not less than 80% by mass, and may be 100% by mass. When the total amount is larger, the low temperature properties are better, and required on-ice performance tends to be able to be exhibited.

The rubber composition may contain another rubber component as long as the effects are not impaired. Examples of the other rubber component include diene-based rubbers such as styrene-butadiene rubber (SBR), acrylonitrile-butadiene rubber (NBR), chloroprene rubber (CR), isobutylene-isoprene-rubber (IIR), and styrene-isoprene-butadiene copolymer rubber (SIBR).

Among them, in one preferred embodiment, the rubber component further contains a styrene-butadiene rubber (SBR).

The SBR is not particularly limited, and, as the SBR, for example, SBRs that are generally used in the tire industry, such as an emulsion-polymerized SBR (E-SBR) and a solution-polymerized SBR (S-SBR), can be used. These SBRs may be used individually, or two or more of these SBRs may be used in combination.

As the SBR, for example, SBRs manufactured by and available from Sumitomo Chemical Co., Ltd., JSR Corporation, Asahi Kasei Corporation, Zeon Corporation, etc., can be used.

The SBR may be an unmodified SBR, or may be a modified SBR. Examples of the modified SBR include modified SBRs in which a functional group that is the same as that in the modified conjugated diene-based polymer is introduced.

As the SBR, an oil-extended SBR can be used, or a non-oil-extended SBR can also be used. In the case where the oil-extended SBR is used, the oil extension amount of the SBR, that is, the amount of the extended oil contained in the SBR, is preferably 10 to 50 parts by mass per 100 parts by mass of the rubber solids of the SBR for the reason that the advantageous effects of the present invention are more suitably achieved.

The styrene content of the SBR is preferably not less than 5% by mass, more preferably not less than 10% by mass, and further preferably not less than 15% by mass. The styrene content is preferably not greater than 60% by mass, more preferably not greater than 50% by mass, further preferably not greater than 45% by mass, and particularly preferably not greater than 40% by mass. When the styrene content is within the above range, the advantageous effects of the present invention are more suitably achieved.

In the present specification, the styrene content of the SBR is calculated by $^1$H-NMR measurement.

For the reason that the advantageous effects of the present invention are more suitably achieved, the vinyl content of the SBR is preferably not less than 10 mol%, more preferably not less than 15 mol%, and further preferably not less than 20 mol%. The vinyl content is preferably not greater than 70 mol%, more preferably not greater than 65 mol%, and further preferably not greater than 50 mol%.

In the present specification, the vinyl content of the SBR indicates the vinyl content of the butadiene moiety (unit quantity of vinyl groups in the butadiene structure), and is calculated by $^1$H-NMR measurement.

For the reason that the advantageous effects of the present invention are more suitably achieved, the glass transition temperature (Tg) of the SBR is preferably not lower than - 90°C and more preferably not lower than -50°C. In addition, the glass transition temperature is preferably not higher than 0°C and more preferably not higher than -10°C.

In the present specification, the glass transition temperature is a value measured according to JIS-K7121 under the condition of a temperature rise rate of 10°C/min by using a differential scanning calorimeter (Q200) manufactured by TA Instruments Japan Inc.

For the reason that the advantageous effects of the present invention are more suitably achieved, the weight-average molecular weight (Mw) of the SBR is preferably not less than 200 thousand, more preferably not less than 250 thousand, further preferably not less than 300 thousand, and particularly preferably not less than 1 million. In addition, the weight-average molecular weight (Mw) is preferably not greater than 2 million and more preferably not greater than 1.8 million.

In the present specification, the weight-average molecular weight (Mw) can be obtained by conversion, based on a polystyrene standard, of a value measured by gel permeation chromatography (GPC) (GPC-8000 series manufactured by Tosoh Corporation, detector: differential refractometer, column: TSKGEL SUPERMULTIPORE HZ-M manufactured by Tosoh Corporation).

For the reason that the advantageous effects of the present invention are more suitably achieved, the amount of the SBR in 100% by mass of the rubber component is preferably not less than 10% by mass, more preferably not less than 15% by mass, and further preferably not less than 20% by mass. In addition, the amount is preferably not greater than 60% by mass, more preferably not greater than 50% by mass, and further preferably not greater than 40% by mass.

Moreover, for the reason that the advantageous effects of the present invention are more suitably achieved, the amount of the styrene-butadiene rubber per 100 parts by mass of the rubber component is preferably not less than the amount of the water-soluble particles per 100 parts by mass of the rubber component.

(Water-Soluble Particles)

The water-soluble particles are not particularly limited, and any particles that are soluble in water can be used. For example, materials having a solubility in water at normal temperature (20°C) of 1 g/100 g water or greater can be used. However, magnesium sulfate fibers having an average fiber length of 15 μm and an average fiber diameter of 0.5 μm are excluded.

The water-soluble particles satisfy the following formula (I). That is, the water-soluble particles have a median particle size not greater than 30μm. In other words, the water-soluble particles in the present invention are fine particles having a D50 not greater than 30 μm.

$$D50 \leq 30 \qquad (I)$$

(D50 in formula (I) represents the median particle size (μm) of the water-soluble particles.)

In the case where the water-soluble particles satisfy the above formula (I), the use of such water-soluble particles increases the number of edges of voids formed by dissolving the water-soluble particles, so that an edge effect and a water film removing effect are greater, and excellent on-ice performance is achieved. In addition, the water-soluble particles are less likely to become fracture origins, and a decrease in wear resistance is reduced. Due to these facts, excellent on-ice performance improvement can be achieved and good wear resistance is also achieved, so that combined performance of on-ice performance and wear resistance is improved.

From the viewpoint of on-ice performance and wear resistance, the median particle size (median diameter, D50) of the water-soluble particles is preferably not greater than 25 μm, more preferably not greater than 20 μm, and further preferably not greater than 15 μm. On the other hand, the lower limit of the median particle size of the water-soluble particles is not particularly limited, but, from the viewpoint of combined performance of on-ice performance and wear resistance, the median particle size is preferably not less than 1 μm, more preferably not less than 3 μm, further preferably not less than 5 μm, and particularly preferably not less than 10 μm.

In the present specification, the median particle size is a particle diameter at an integrated mass value of 50% of a particle diameter distribution curve obtained by particle diameter distribution measurement using a laser diffraction method. Specifically, the median particle size can be measured by a method described in EXAMPLES described later.

From the viewpoint of on-ice performance and wear resistance, the aspect ratio of the water-soluble particles is preferably 1:1 to 25, more preferably 1:1 to 20, further preferably 1:1 to 15, still further preferably 1:1 to 10, even further preferably 1:1 to 5, and particularly preferably 1:1 to 2.5.

In the present specification, the aspect ratio can be measured by transmission electron microscopy.

The amount of the water-soluble particles per 100 parts by mass of the rubber component is preferably not less than 1 part by mass, more preferably not less than 5 parts by mass, further preferably not less than 10 parts by mass, still further preferably not less than 20 parts by mass, and particularly preferably not less than 25 parts by mass. When the amount is set to be not less than the lower limit, the amount of the component that contributes to the edge effect is increased, and good on-ice performance tends to be achieved. The amount is preferably not greater than 100 parts by mass, more preferably not greater than 70 parts by mass, further preferably not greater than 50 parts by mass,

particularly preferably not greater than 40 parts by mass, and most preferably not greater than 30 parts by mass. When the amount is set to be not greater than the upper limit, good rubber properties such as breaking strength and wear resistance tend to be exhibited.

The water-soluble particles preferably satisfy a relationship of the following formula (II).

$$A/D50 \geq 0.5 \qquad (II)$$

(A in formula (II) represents the amount (parts by mass) of the water-soluble particles per 100 parts by mass of the rubber component. D50 represents the median particle size ($\mu$m) of the water-soluble particles.)

When the water-soluble particles satisfy the above formula (II), combined performance of on-ice performance and wear resistance is significantly improved. A/D50 in the above formula (II) is more preferably not less than 0.8, further preferably not less than 1.5, still further preferably not less than 2.0, and particularly preferably not less than 2.5. On the other hand, the upper limit of A/D50 in the above formula (II) is not particularly limited, but, from the viewpoint of combined performance of on-ice performance and wear resistance, A/D50 is preferably not greater than 10, more preferably not greater than 5.0, and further preferably not greater than 3.0.

Examples of the water-soluble particles include water-soluble inorganic salts and water-soluble organic substances. These types of particles may be used individually, or two or more of these types of particles may be used in combination.

Examples of the water-soluble inorganic salts include: metal sulfates such as magnesium sulfate and potassium sulfate; metal chlorides such as potassium chloride, sodium chloride, calcium chloride, and magnesium chloride; metal hydroxides such as potassium hydroxide and sodium hydroxide; carbonates such as potassium carbonate and sodium carbonate; phosphates such as sodium hydrogen phosphate and sodium dihydrogen phosphate; and the like.

Examples of the water-soluble organic substances include lignin derivatives and saccharides. As the lignin derivative, lignin sulfonic acid, lignin sulfonates, etc., are suitable. The lignin derivatives may each be obtained by either a sulfite pulp method or a kraft pulp method.

Examples of the lignin sulfonates include alkali metal salts, alkaline earth metal salts, ammonium salts, alcohol amine salts, and the like of lignin sulfonic acid. Among them, alkali metal salts (potassium salt, sodium salt, etc.) and alkaline earth metal salts (calcium salt, magnesium salt, lithium salt, barium salt, etc.) of lignin sulfonic acid are preferable.

The lignin derivative preferably has a degree of sulfonation of 1.5 to 8.0/$OCH_3$. In this case, the lignin derivative includes lignin sulfonic acid and/or a lignin sulfonate in which at least a part of lignin and/or a decomposed product thereof is substituted with a sulfo group (sulfone group), and the sulfo group of lignin sulfonic acid may be in a non-ionized state, or the hydrogen of the sulfo group may be replaced by an ion such as a metal ion. The degree of sulfonation is more preferably 3.0 to 6.0/$OCH_3$. When the degree of sulfonation is set to be within the above range, good on-ice performance tends to be achieved.

The degree of sulfonation of lignin derivative particles (a lignin derivative that forms the particles) is the introduction rate of a sulfo group and is obtained by the following equation.

$$\text{Degree of sulfonation } (/OCH_3) = \text{S (mole) in sulfo group in lignin derivative / methoxy group (mole) in lignin derivative}$$

The saccharides are not particularly limited in the number of constituent carbon atoms, and may be any of monosaccharides, oligosaccharides, and polysaccharides. Examples of the monosaccharides include trioses such as aldotriose and ketotriose; tetroses such as erythrose and threose; pentoses such as xylose and ribose; hexoses such as mannose, allose, altrose, and glucose; and heptoses such as sedoheptulose. Examples of oligosaccharides include disaccharides such as sucrose and lactose; trisaccharides such as raffinose and melezitose; tetrasaccharides such as acarbose and stachyose; and oligosaccharides such as xylooligosaccharide and cellooligosaccharide. Examples of the polysaccharides include glycogen, starch (amylose, amylopectin), cellulose, hemicellulose, dextrin, and glucan.

As the water-soluble particles, among them, magnesium sulfate is preferable. When magnesium sulfate having a median particle size not greater than a predetermined value is used as the water-soluble particles, the number of edges of voids formed by dissolving the magnesium sulfate on an ice road surface is increased, so that a wiping effect becomes particularly great, and on-ice performance can be particularly significantly improved.

(Silica)

From the viewpoint of the combined performance, the rubber composition preferably contains silica as a filler. Examples of the silica include dry-process silica (anhydrous silica) and wet-process silica (hydrous silica). Among them, wet-process silica is preferable for the reason that it has a higher silanol group content. As commercially available products, products of Degussa, Rhodia, Tosoh Silica Corporation, Solvay Japan, Ltd., Tokuyama Corporation, etc., can be used. These types of silica may be used individually, or two or more of these types of silica may be used in combination.

The amount of the silica per 100 parts by mass of the rubber component is preferably not less than 25 parts by mass, more preferably not less than 30 parts by mass, further preferably not less than 50 parts by mass, still further preferably not less than 55 parts by mass, and particularly preferably not less than 60 parts by mass. When the amount is set to be not less than the lower limit, good wear resistance tends to be achieved. The upper limit of the amount is not particularly limited, but the amount is preferably not greater than 300 parts by mass, more preferably not greater than 200 parts by mass, further preferably not greater than 170 parts by mass, particularly preferably not greater than 100 parts by mass, and most preferably not greater than 80 parts by mass. When the amount is set to be not greater than the upper limit, good dispersibility tends to be achieved.

The nitrogen adsorption specific surface area ($N_2SA$) of the silica is preferably not less than 70 $m^2/g$, more preferably not less than 140 $m^2/g$, and further preferably not less than 160 $m^2/g$. When the $N_2SA$ is set to be not less than the lower limit, good wear resistance and breaking strength tend to be achieved. In addition, the upper limit of the $N_2SA$ of the silica is not particularly limited, but the $N_2SA$ is preferably not greater than 500 $m^2/g$, more preferably not greater than 300 $m^2/g$, and further preferably not greater than 250 $m^2/g$. When the $N_2SA$ is set to be not greater than the upper limit, good dispersibility tends to be achieved.

The $N_2SA$ of the silica is a value measured by the BET method according to ASTM D3037-93.

In one preferred embodiment, particulate silica having a nitrogen adsorption specific surface area not less than 180 $m^2/g$ is blended as the silica.

The nitrogen adsorption specific surface area ($N_2SA$) of the particulate silica is not less than 180 $m^2/g$, preferably not less than 190 $m^2/g$, and more preferably not less than 200 $m^2/g$. When the $N_2SA$ is set to be not less than the lower limit, sufficient reinforcement performance is achieved, and good wear resistance and breaking strength tend to be achieved. In addition, the upper limit of the $N_2SA$ of the particulate silica is not particularly limited, but the $N_2SA$ is preferably not greater than 500 $m^2/g$ and more preferably not greater than 300 $m^2/g$. When the $N_2SA$ is set to be not greater than the upper limit, good dispersibility tends to be achieved.

The $N_2SA$ of the particulate silica is a value measured by the BET method according to ASTM D3037-93.

Examples of the particulate silica include dry-process silica (anhydrous silica) and wet-process silica (hydrous silica). Among them, wet-process silica is preferable for the reason that it has a higher silanol group content. As commercially available products, products of Degussa, Rhodia, Tosoh Silica Corporation, Solvay Japan, Ltd., Tokuyama Corporation, etc., can be used. These types of silica may be used individually, or two or more of these types of silica may be used in combination.

The amount of the particulate silica per 100 parts by mass of the rubber component is preferably not less than 120 parts by mass, more preferably not less than 125 parts by mass, and further preferably not less than 130 parts by mass. When the amount is set to be not less than the lower limit, good wear resistance and steering stability tend to be achieved. The upper limit of the amount is not particularly limited, but the amount is preferably not greater than 140 parts by mass and more preferably not greater than 135 parts by mass. When the amount is set to be not greater than the upper limit, good dispersibility tends to be achieved.

Moreover, for the reason that the advantageous effects of the present invention are more suitably achieved, the amount of the particulate silica per 100 parts by mass of the rubber component is also preferably not less than the amount of the water-soluble particles per 100 parts by mass of the rubber component.

From the viewpoint of combined performance of on-ice performance and wear resistance, the silica content in 100% by mass of a total amount of the silica and carbon black in the rubber composition is preferably not less than 50% by mass, more preferably not less than 80% by mass, and further preferably not less than 90% by mass.

(Silane Coupling Agent)

In the case where the rubber composition contains silica, the rubber composition preferably further contains a silane coupling agent. The silane coupling agent is not particularly limited, and examples of the silane coupling agent include: sulfide-based silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto-based silane coupling agents such as 3-mercaptopropyltrimethoxysilane, 2-mercaptoethyltriethoxysilane, and NXT and NXT-Z manufactured by Momentive; vinyl-based silane coupling agents such as vinyltriethoxysilane and vinyltrimethoxysilane; amino-based silane coupling agents such as 3-aminopropyltriethoxysilane and 3-aminopropyltrimethoxysilane; glycidoxy-based silane coupling agents such as γ-glycidoxypropyltriethoxysilane and γ-glycidoxypropyltrimethoxysilane; nitro-based silane coupling agents such as 3-nitropropyltrimethoxysilane and 3-nitropropyltriethoxysilane; and chloro-based silane coupling agents such as 3-chloropropyltrimethoxysilane and 3-chloropropyltriethoxysilane. Among them, mercapto-based silane coupling agents are preferable. As commercially available products, products of Degussa, Momentive, Shin-Etsu Silicones, Tokyo Chemical Industry Co., Ltd., AZmax, Dow Corning Toray Co., Ltd., etc., can be used. These silane coupling agents may be used individually, or two or more of these silane coupling agents may be used in combination.

The amount of the silane coupling agent per 100 parts by mass of the silica is preferably not less than 3 parts by mass and more preferably not less than 6 parts by mass. When the amount is not less than the lower limit, good breaking strength, etc., tend to be achieved. In addition, the amount is preferably not greater than 20 parts by mass and more preferably not greater than 15 parts by mass. When the amount is not greater than the upper limit, an effect corresponding to the blending amount tends to be achieved.

(Carbon Black)

From the viewpoint of the combined performance, the rubber composition preferably contains carbon black as a filler. The carbon black is not particularly limited, but examples of the carbon black include N134, N110, N220, N234, N219, N339, N330, N326, N351, N550, and N762. As commercially available products, products of Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon Co., etc., can be used. These carbon blacks may be used individually, or two or more of these carbon blacks may be used in combination.

The amount of the carbon black per 100 parts by mass of the rubber component is preferably not less than 1 part by mass and more preferably not less than 3 parts by mass. When the amount is set to be not less than the lower limit, good wear resistance and on-ice performance (on-ice grip performance), etc., tend to be achieved. In addition, the amount is preferably not greater than 10 parts by mass and more preferably not greater than 7 parts by mass. When the amount is set to be not greater than the upper limit, good processability of the rubber composition tends to be achieved.

The nitrogen adsorption specific surface area ($N_2SA$) of the carbon black is preferably not less than 50 $m^2/g$, more preferably not less than 80 $m^2/g$, and further preferably not less than 100 $m^2/g$. When the $N_2SA$ is set to be not less than the lower limit, good wear resistance and on-ice performance tend to be achieved. In addition, the $N_2SA$ is preferably not greater than 200 $m^2/g$, more preferably not greater than 150 $m^2/g$, and further preferably not greater than 130 $m^2/g$. When the $N_2SA$ is set to be not greater than the upper limit, good dispersibility of the carbon black tends to be achieved.

The nitrogen adsorption specific surface area of the carbon black is obtained according to JIS K6217-2:2001.

From the viewpoint of combined performance of on-ice performance and wear resistance, the total amount of the silica and the carbon black per 100 parts by mass of the rubber component in the rubber composition is preferably 50 to 120 parts by mass. The total amount is more preferably not less than 55 parts by mass and further preferably not less than 60 parts by mass. In addition, the total amount is more preferably not greater than 100 parts by mass and further preferably not greater than 80 parts by mass.

(Liquid Plasticizer)

The rubber composition may contain a liquid plasticizer.

The liquid plasticizer is not particularly limited as long as the plasticizer is in liquid form at 20°C, and examples of the liquid plasticizer include oils, liquid resins, and liquid diene-based polymers. These plasticizers may be used individually, or two or more of these plasticizers may be used in combination.

Examples of the oils include process oils, vegetable oils, and mixtures thereof. As the process oil, for example, paraffinic process oil, aromatic process oil, naphthenic process oil, or the like can be used. Examples of the vegetable oils include castor oil, cotton seed oil, linseed oil, rapeseed oil, soybean oil, palm oil, coconut oil, peanut oil, rosin, pine oil, pine tar, tall oil, corn oil, rice bran oil, safflower oil, sesame oil, olive oil, sunflower oil, palm kernel oil, camellia oil, jojoba oil, macadamia nut oil, and tung oil. As commercially available products, products of Idemitsu Kosan Co., Ltd., Sankyo Yuka Kogyo K.K., JXTG Nippon Oil & Energy Corporation, Olisoy, H&R, Hokoku Corporation, Showa Shell Sekiyu K.K., FUJI KOSAN COMPANY, LTD., The Nisshin OilliO Group, Ltd., etc., can be used.

Examples of the liquid resins include terpene-based resins (including terpene-phenol resins and aromatic modified terpene resins), rosin resins, styrene-based resins, C5-based resins, C9-based resins, C5/C9-based resins,

dicyclopentadiene (DCPD) resins, coumarone-indene-based resins (including coumarone resins and indene resins), phenol resins, olefin-based resins, polyurethane resins, and acrylic resins that are in liquid form at 20°C.

Examples of the liquid diene-based polymers include liquid styrene-butadiene copolymers (liquid SBRs), liquid butadiene polymers (liquid BRs), liquid isoprene polymers (liquid IRs), liquid styrene-isoprene copolymers (liquid SIRs), liquid styrene-butadiene-styrene block copolymers (liquid SBS block polymers), liquid styrene-isoprene-styrene block copolymers (liquid SIS block polymers), liquid farnesene polymers, and liquid farnesene-butadiene copolymers that are in liquid form at 20°C. The terminals and the main chains of these polymers may be modified with polar groups.

From the viewpoint of combined performance of on-ice performance and wear resistance, the amount of the liquid plasticizer per 100 parts by mass of the rubber component is preferably not greater than 30 parts by mass, more preferably not greater than 20 parts by mass, and further preferably not greater than 10 parts by mass. The lower limit is not particularly limited, and the liquid plasticizer does not have to be blended, but, from the viewpoint of on-ice performance, the amount is preferably not less than 1 part by mass, more preferably not less than 3 parts by mass, and further preferably not less than 5 parts by mass.

The rubber composition may contain a resin (solid resin: a resin in solid form at normal temperature (25°C)).

Examples of the resin (solid resin) include aromatic vinyl polymers, coumarone-indene resins, coumarone resins, indene resins, phenol resins, rosin resins, petroleum resins (C5-based resins, C9-based resins, etc.), terpene-based resins, and acrylic-based resins. As commercially available products, products of Maruzen Petrochemical Co., Ltd., Sumitomo Bakelite Co., Ltd., YASUHARA CHEMICAL CO., LTD, Tosoh Corporation, Rutgers Chemicals AG, BASF, Arizona Chemical Company, NITTO CHEMICAL CO., LTD., NIPPON SHOKUBAI CO., LTD., JXTG Nippon Oil & Energy Corporation, Arakawa Chemical Industries, Ltd., Taoka Chemical Co., Ltd., TOAGOSEI CO., LTD., etc., can be used. These resins may be used individually, or two or more of these resins may be used in combination. Among them, from the viewpoint that the advantageous effects of the present invention are more suitably achieved, terpene-based resins, C5-based resins, and C9-based resins are preferable.

The aromatic vinyl polymers refer to resins obtained by polymerizing α-methylstyrene and/or styrene, and examples of such resins include styrene homopolymers (styrene resins), α-methylstyrene homopolymers (a-methyl styrene resins), and copolymers of styrene and other monomers.

The coumarone-indene resins refer to resins that contain coumarone and indene as main monomer components that form the backbone (main chain) of the resins. Examples of the monomer components included in the backbone other than coumarone and indene include α-methylstyrene, methylindene, and vinyltoluene.

The coumarone resins refer to resins that contain coumarone as a main monomer component that forms the backbone (main chain) of the resins.

The indene resins refer to resins that contain indene as a main monomer component that forms the backbone (main chain) of the resins.

Examples of the phenol resins include resins obtained by reacting phenol with aldehydes such as formaldehyde, acetaldehyde, and furfural by an acid or alkali catalyst. Among them, resins obtained by reaction using an acid catalyst (novolac type phenol resins, etc.) are preferable.

Examples of the rosin resins include rosin-based resins typified by natural rosin, polymerized rosin, modified rosin, ester compounds of these rosins, and hydrogenated products of these rosins.

Examples of the petroleum resins include C5-based resins and C9-based resins.

As the C5-based resin, C5 resins, dicyclopentadiene (DCPD) resins, etc., can be used. In addition, hydrogenated products of these resins can also be used.

As the C9-based resin, styrene/α-methylstyrene resins (copolymers of a-methylstyrene and styrene), coumarone/indene/styrene resins, DCPD/C9 resins, C5/C9 resins, etc., can be used. In addition, hydrogenated products of these resins can also be used.

As the terpene-based resin, polyterpene resins each obtained by polymerizing a terpene compound, aromatic modified terpene resins each obtained by polymerizing a terpene compound and an aromatic compound, etc., can be used. Moreover, hydrogenated products of these resins can also be used.

The polyterpene resins refer to resins obtained by polymerizing terpene compounds. The terpene compounds are hydrocarbons represented by a composition of $(C_5H_8)_n$ and oxygenated derivatives thereof, and are compounds having, as a basic backbone, a terpene classified into monoterpene ($C_{10}H_{16}$), sesquiterpene ($C_{15}H_{24}$), diterpene ($C_{20}H_{32}$), and the like. Examples of the terpene compounds include α-pinene, β-pinene, dipentene, limonene, myrcene, allo-ocimene, ocimene, α-phellandrene, α-terpinene, γ-terpinene, terpinolene, 1,8-cineole, 1,4-cineole, α-terpineol, β-terpineol, and γ-terpineol.

Examples of the polyterpene resins include pinene resins, limonene resins, dipentene resins, and pinene/limonene resins that are formed from the above-described terpene compounds. Among them, pinene resins are preferable since a polymerization reaction is easy and since natural pine resin is a raw material, and thus the cost is low. In general, pinene resins include both α-pinene and β-pinene, which are isomeric with each other. Depending on the contained components, pinene resins are classified into β-pinene resins containing β-pinene as a main component,

and α-pinene resins containing α-pinene as a main component.

Examples of the aromatic modified terpene resins include terpene-phenol resins formed from the above terpene compounds and phenol-based compounds, and terpene-styrene resins formed from the above terpene compounds and styrene-based compounds. Moreover, terpene-phenol-styrene resins formed from the above terpene compounds, phenol-based compounds, and styrene-based compounds can also be used. Examples of the phenol-based compounds include phenol, bisphenol A, cresol, and xylenol. Examples of the styrene-based compounds include styrene and α-methylstyrene.

As the acrylic-based resin, styrene-acrylic-based resins, such as a styrene acrylic resin, having a carboxyl group and obtained by copolymerizing an aromatic vinyl monomer component and an acrylic-based monomer component can be used. Among them, a non-solvent type carboxyl group-containing styrene-acrylic-based resin is suitable for use.

The non-solvent type carboxyl group-containing styrene-acrylic-based resin refers to a (meth)acrylic-based resin (polymer) synthesized by a high-temperature continuous polymerization method (high-temperature continuous bulk polymerization method) (the methods disclosed in US Patent No. 4,414,370, Japanese Laid-Open Patent Publication No. S59-6207, Japanese Examined Patent Publication No. H5-58005, Japanese Laid-Open Patent Publication No. H1-313522, US Patent No. 5,010,166, annual research report of Toagosei Co., Ltd., TREND 2000, No. 3, pages 42-45, etc.) by avoiding use of a polymerization initiator, a chain transfer agent, an organic solvent, etc., which are sub-materials, as much as possible. In the present specification, (meth)acrylic means methacrylic and acrylic.

Examples of the acrylic monomer component that forms the acrylic-based resin include (meth)acrylic acid, (meth)acrylic acid esters (alkyl esters such as 2-ethylhexyl acrylate, aryl esters, aralkyl esters, etc.), (meth)acrylamide, and (meth)acrylic acid derivatives such as (meth)acrylamide derivatives. (Meth)acrylic acid is a generic term for acrylic acid and methacrylic acid.

Examples of the aromatic vinyl monomer component that forms the acrylic-based resin include aromatic vinyls such as styrene, α-methylstyrene, vinyltoluene, vinylnaphthalene, divinylbenzene, trivinylbenzene, and divinylnaphthalene.

Moreover, as the monomer component that forms the acrylic-based resin, another monomer component may be used together with (meth)acrylic acid, a (meth)acrylic acid derivative, or an aromatic vinyl.

As the resin, in the case where the main component (a rubber component of which the blending amount is the largest in the rubber component) of the rubber component is an isoprene-based rubber, terpene-based resins and C5-based resins are preferably used, and, in the case where the main component of the rubber component is an SBR, C9-based resins are preferably used.

From the viewpoint of combined performance of on-ice performance and wear resistance, the total amount of the resin (solid resin) and the liquid plasticizer per 100 parts by mass of the rubber component in the rubber composition is preferably not greater than 60 parts by mass, more preferably not greater than 35 parts by mass, and further preferably not greater than 30 parts by mass. The lower limit is not particularly limited, and the resin and the liquid plasticizer do not have to be blended, but, from the viewpoint of on-ice performance, the total amount is preferably not less than 5 parts by mass and more preferably not less than 7 parts by mass.

In one preferred embodiment, the amount of the resin per 100 parts by mass of the rubber component is not less than 40 parts by mass. The amount of the resin per 100 parts by mass of the rubber component is more preferably not less than 45 parts by mass. In addition, the amount is preferably not greater than 50 parts by mass.

Moreover, for the reason that the advantageous effects of the present invention are more suitably achieved, the amount of the resin per 100 parts by mass of the rubber component is preferably not less than the amount of the water-soluble particles per 100 parts by mass of the rubber component.

(Other Materials)

From the viewpoint of crack resistance, ozone resistance, etc., the rubber composition preferably contains an antioxidant.

The antioxidant is not particularly limited, but examples of the antioxidant include: naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline-based antioxidants such as a polymer of 2,2,4-trimethyl-1,2-dihydroquinoline; monophenol antioxidants such as 2,6-di-t-butyl-4-methylphenol and styrenated phenol; and bis-, tris-, and poly-phenol antioxidants such as tetrakis-[methylene-3-(3',5'-di-t-butyl-4'-hydroxyphenyl)propionate]methane. Among them, the p-phenylenediamine antioxidants and the quinoline-based antioxidants are preferable, and N-(1,3-dimethylbutyl)-N'-phenyl-p-phenylenediamine and a polymer of 2,2,4-trimethyl-1,2-dihydroquinoline are more preferable. As commercially available products, for example, products of Seiko Chemical Co., Ltd., Sumitomo Chemical Co., Ltd., Ouchi Shinko Chemical Industrial Co., Ltd., Flexsys, etc., can be used.

The amount of the antioxidant per 100 parts by mass of the rubber component is preferably not less than 0.2

parts by mass and more preferably not less than 0.5 parts by mass. When the amount is set to be not less than the lower limit, sufficient ozone resistance tends to be achieved. The amount is preferably not greater than 7.0 parts by mass and more preferably not greater than 4.0 parts by mass. When the amount is set to be not greater than the upper limit, good tire appearance tends to be achieved.

The rubber composition preferably contains stearic acid. From the viewpoint of the combined performance, the amount of the stearic acid per 100 parts by mass of the rubber component is preferably 0.5 to 10 parts by mass and more preferably 0.5 to 5 parts by mass.

As the stearic acid, a conventionally known one can be used, and, for example, products of NOF Corporation, Kao Corporation, FUJIFILM Wako Pure Chemical Industries, Ltd., New Japan Chemical Co., Ltd., etc., can be used.

The rubber composition preferably contains zinc oxide. From the viewpoint of the combined performance, the amount of the zinc oxide per 100 parts by mass of the rubber component is preferably 0.5 to 10 parts by mass and more preferably 1 to 5 parts by mass.

As the zinc oxide, a conventionally known one can be used, and, for example, products of Mitsui Mining & Smelting Co., Ltd., Toho Zinc Co., Ltd., HakusuiTech Co., Ltd., SEIDO CHEMICAL INDUSTRY CO., LTD., Sakai Chemical Industry Co., Ltd., etc., can be used.

The rubber composition may contain a wax. The wax is not particularly limited, and examples of the wax include petroleum waxes and natural waxes. In addition, a synthetic wax obtained by refining or chemically treating a plurality of waxes can also be used. These waxes may be used individually, or two or more of these waxes may be used in combination.

Examples of the petroleum waxes include paraffin wax and microcrystalline wax. The natural waxes are not particularly limited as long as the natural waxes are derived from materials other than petroleum. Examples of the natural waxes include: vegetable waxes such as candelilla wax, carnauba wax, Japan wax, rice wax, and jojoba wax; animal waxes such as beeswax, lanolin, and whale wax; mineral waxes such as ozokerite, ceresin, and petrolatum; and refined products thereof. As commercially available products, for example, products of Ouchi Shinko Chemical Industrial Co., Ltd., NIPPON SEIRO CO., LTD., Seiko Chemical Co., Ltd., etc. can be used. The amount of the wax may be set as appropriate in view of ozone resistance and cost.

The rubber composition preferably contains sulfur from the viewpoint of moderately forming crosslinked chains in the polymer chain and imparting the combined performance that is good.

The amount of the sulfur per 100 parts by mass of the rubber component is preferably not less than 0.1 parts by mass, more preferably not less than 0.5 parts by mass, and further preferably not less than 0.7 parts by mass. The amount is preferably not greater than 6.0 parts by mass, more preferably not greater than 4.0 parts by mass, and further preferably not greater than 3.0 parts by mass. When the amount is set to be within the above range, the combined performance that is good tends to be achieved.

Examples of the sulfur include powdery sulfur, precipitated sulfur, colloidal sulfur, insoluble sulfur, highly dispersible sulfur, and soluble sulfur, which are generally used in the rubber industry. As commercially available products, products of Tsurumi Chemical Industry Co., Ltd., Karuizawa Sulfur Co, Ltd., SHIKOKU CHEMICALS CORPORATION, Flexsys, Nippon Kanryu Industry Co., Ltd., Hosoi Chemical Industry Co., Ltd., etc., can be used. These sulfurs may be used individually, or two or more of these sulfurs may be used in combination.

The rubber composition preferably contains a vulcanization accelerator.

The amount of the vulcanization accelerator is not particularly limited and may be freely determined in accordance with a desired vulcanization rate or crosslink density. The amount of the vulcanization accelerator per 100 parts by mass of the rubber component is normally 0.3 to 10 parts by mass and preferably 0.5 to 7 parts by mass.

The type of the vulcanization accelerator is not particularly limited, and vulcanization accelerators that are normally used can be used. Examples of the vulcanization accelerator include: thiazole-based vulcanization accelerators such as 2-mercaptobenzothiazole, di-2-benzothiazolyl disulfide, and N-cyclohexyl-2-benzothiazyl sulfenamide; thiuram-based vulcanization accelerators such as tetramethylthiuram disulfide (TMTD), tetrabenzylthiuram disulfide (TBzTD), and tetrakis (2-ethylhexyl)thiuram disulfide (TOT-N); sulfenamide-based vulcanization accelerators such as N-cyclohexyl-2-benzothiazole sulfenamide, N-t-butyl-2-benzothiazolyl sulfenamide, N-oxyethylene-2-benzothiazole sulfenamide, and N,N'-diisopropyl-2-benzothiazole sulfenamide; and guanidine-based vulcanization accelerators such as diphenylguanidine, diorthotolylguanidine, and orthotolylbiguanidine. These vulcanization accelerators may be used individually, or two or more of these vulcanization accelerators may be used in combination. Among them, sulfenamide-based vulcanization accelerators and guanidine-based vulcanization accelerators are preferable.

In addition to the above components, the rubber composition may contain ingredients that are generally used in the tire industry, for example, materials such as a mold lubricant, as appropriate.

As a method for producing the rubber composition, a known method can be used. For example, the rubber composition can be produced by a method in which the above respective components are kneaded using a rubber kneading device such as an open roll and a Banbury mixer and then vulcanization is performed.

As for the kneading conditions, in a base kneading step of kneading the additives other than a vulcanizing

agent and the vulcanization accelerator, the kneading temperature is normally 50 to 200°C and preferably 80 to 190°C, and the kneading time is normally 30 seconds to 30 minutes and preferably 1 minute to 30 minutes. In a finish kneading step of kneading the vulcanizing agent and the vulcanization accelerator, the kneading temperature is normally not higher than 100°C and preferably room temperature to 80°C. In addition, a composition obtained by kneading the vulcanizing agent and the vulcanization accelerator is normally subjected to vulcanization processing such as press vulcanization. The vulcanization temperature is normally 120 to 200°C and preferably 140 to 180°C.

The rubber composition is produced by a general method. Specifically, for example, the rubber composition can be produced by a method in which the above respective components are kneaded using a Banbury mixer, a kneader, an open roll, or the like, and then vulcanization is performed.

The rubber composition is suitable for use for members of tires such as sidewalls, base treads, bead apexes, clinch apexes, inner liners, under treads, breaker toppings, ply toppings, and treads (a single-layer tread, a cap tread (cap layer) of a multilayer tread, etc.), and is particularly suitable for use for treads.

(Tire)

The tire according to the present invention is produced by a normal method using the above rubber composition. Specifically, an unvulcanized tire is formed by extruding a rubber composition obtained by blending the above components, in an unvulcanized state so as to correspond to the shape of each of the above tire members (a tread, etc.), and shaping the extruded rubber composition together with other tire members on a tire shaping machine by a general method. A tire is obtained by heating and pressurizing the unvulcanized tire in a vulcanizing machine.

Examples of the tire include: pneumatic tires; run flat tires; and winter tires such as studless tires, studdable tires, and snow tires. Among them, winter tires are suitable, and studless tires are particularly suitable. The studless tires are suitable for use as studless tires for a passenger car.

As described above, a tire (preferably a winter tire, particularly preferably a studless tire) including a member (preferably, a tread) produced by using the rubber composition is also one example of the present invention.

In a tire including a tread produced by using the rubber composition, the maximum thickness of the tread is preferably not less than 5.5 mm. When the maximum thickness of the tread is set to be within such a range, the advantageous effects of the present invention are more suitably achieved. The maximum thickness of the tread is more preferably not less than 6.0 mm. In addition, the maximum thickness of the tread is preferably not greater than 10.0 mm, more preferably not greater than 9.5 mm, and further preferably not greater than 9.0 mm.

Hereinafter, one example of a preferred embodiment will be described with reference to the drawing.

FIG. 1 shows an area around a tread of a tire. Here, the tread is a member located outward of a band layer 6 in the tire radial direction. In FIG. 1, the up-down direction is the radial direction of the tire, the right-left direction is the axial direction of the tire, and the direction perpendicular to the surface of the sheet is the circumferential direction of the tire.

The tread 1 has a shape that is convex outward in the radial direction. The tread 1 forms a tread surface 2 that is brought into contact with a road surface. Grooves 3 are formed on the tread 1. A tread pattern is formed by the grooves 3. The tread 1 includes a cap layer 4 and a base layer 5. The cap layer 4 is located outward of the base layer 5 in the radial direction. The cap layer 4 is laminated on the base layer 5.

In FIG. 1, reference character P indicates a point on the tread surface 2. The point P is located outward of the groove 3 located at the innermost side in the axial direction. A double-headed arrow T indicates the thickness of the tread 1 at the point P. The thickness T is the sum of the thicknesses of the cap layer 4 and the base layer 5 at the point P. The thickness T is measured along a line normal to the tread surface 2 at the point P. FIG. 1 shows an example of the tread 1 with a two-layer structure including the cap layer 4 and the base layer 5. In the case of a single-layer structure tread 1, the thickness T of the tread is the thickness of the single-layer structure tread at the point P. In the case of a tread having a structure with three or more layers, the thickness T of the tread is the sum of the thicknesses of the three or more layers at the point P, and the thickness T at the point P in this case is also measured along the line normal to the tread surface 2 at the point P.

In FIG. 1, the maximum thickness of the tread 1 is the maximum dimension among the tread thicknesses (the sums of the thicknesses of the cap layer 4 and the base layer 5 in FIG. 1) at points on the tread surface 2.

In FIG. 1, the band layer 6 including a band cord extends in the circumferential direction. A belt layer 7 including two belt cords that extend in opposite directions so as to be inclined relative to the circumferential direction is located inward of the band layer 6 in the radial direction. A carcass 8 is located inward of the belt layer 7 in the radial direction, and the belt layer 7 reinforces the carcass 8. Furthermore, an inner liner 9 is located inward of the carcass 8 in the radial direction. The inner liner 9 is joined to the inner surface of the carcass 8.

EXAMPLES

The present invention will be specifically described by means of examples, but the present invention is not

limited to these examples.

Various chemicals used in the examples and comparative examples are described below.

Natural rubber (NR): RSS#3

Butadiene rubber (BR): BR150B (cis content: 95% by mass or greater) manufactured by Ube Industries, Ltd.

Styrene-butadiene rubber (SBR): NS616 (styrene content: 21% by mass) manufactured by Zeon Corporation

Carbon black: SEAST N220 manufactured by Mitsubishi Chemical Corporation

Silica: ULTRASIL VN3 ($N_2SA$: 172 $m^2/g$) manufactured by Evonik Degussa GmbH

Particulate silica: Zeosil Premium 200MP ($N_2SA$: 220 $m^2/g$) manufactured by Rhodia

Silane coupling agent: Si266 manufactured by Evonik Degussa GmbH

Silane coupling agent NXT: NXT (3-octanoylthiopropyltriethoxysilane) manufactured by Momentive

Water-soluble particles A: particles (magnesium sulfate, median particle size (median diameter): 10 μm) obtained by sieving MN-00, manufactured by UMAI CHEMICAL CO., LTD., through a 500-mesh sieve

Water-soluble particles B: particles (magnesium sulfate, median particle size (median diameter): 30 μm) obtained by sieving MN-00, manufactured by UMAI CHEMICAL CO., LTD., through a 500-mesh sieve and then sieving the obtained sieve residue through a 280-mesh sieve

Water-soluble particles C: particles (magnesium sulfate, median particle size (median diameter): 100 μm) obtained by sieving MN-00, manufactured by UMAI CHEMICAL CO., LTD., through a 200-mesh sieve and then sieving the obtained sieve residue through a 120-mesh sieve

Water-soluble particles D: particles (magnesium sulfate, median particle size (median diameter): 150 μm) obtained by sieving MN-00, manufactured by UMAI CHEMICAL CO., LTD., through a 120-mesh sieve and then sieving the obtained sieve residue through an 83-mesh sieve

Water-soluble particles E: sodium lignin sulfonate (median particle size (median diameter): 20 μm) manufactured by Tokyo Chemical Industry Co., Ltd.

Wax: OZOACE wax manufactured by NIPPON SEIRO CO., LTD.

Antioxidant: NOCRAC 6C manufactured by Ouchi Shinko Chemical Industrial Co., Ltd.

Oil: PS-32 (mineral oil [paraffinic process oil]) manufactured by Idemitsu Kosan Co., Ltd.

Resin: PETROTACK 100V (C5/C9 resin, Mw: 3800, softening point: 96°C) manufactured by Tosoh Corporation

Stearic acid: Tsubaki manufactured by NOF Corporation

Zinc oxide: Zinc Oxide Type-2 manufactured by Mitsui Mining & Smelting Co., Ltd.

Sulfur: powdery sulfur manufactured by Tsurumi Chemical Industry Co., Ltd.

Vulcanization accelerator: NOCCELER NS manufactured by Ouchi Shinko Chemical Industrial Co., Ltd.

[Measurement of Median Particle Size (Median Diameter) of Water-Soluble Particles]

Measurement was performed by a laser diffraction method (measurement operations are as described below) using SALD-2000J manufactured by Shimadzu Corporation.

<Measurement Operations>

Water-soluble particles were dispersed at room temperature in a mixed solution of a dispersing solvent (toluene) and a dispersant (10% by mass sodium di-2-ethylhexyl sulfosuccinate/toluene solution), and the obtained dispersion was agitated while ultrasonic waves were applied to the dispersion, to obtain a test solution. The test solution was transferred to a batch cell, and measured one minute later (refractive index: 1.70-0.20i).

< Examples and Comparative Examples>

In accordance with each of the blending formulas shown in Tables 1 to 3, the natural rubber and the silica, and the butadiene rubber and the silica were added and kneaded under a condition of 150°C for 3 minutes by using a 1.7-L Banbury mixer, to obtain a kneaded product (master batch). Next, the materials other than the sulfur and the vulcanization accelerator were added to the obtained master batch, and the mixture was kneaded under a condition of 150°C for 2 minutes to obtain a kneaded product. Furthermore, the sulfur and the vulcanization accelerator were added to the obtained kneaded product, and the mixture was kneaded under a condition of 80°C for 5 minutes by using an open roll, to obtain an unvulcanized rubber composition.

The obtained unvulcanized rubber composition was press-vulcanized at 170°C for 12 minutes by using a mold having a thickness of 0.5 mm, to obtain a vulcanized rubber composition.

Moreover, each of the obtained unvulcanized rubber compositions was molded into the shape of a cap tread, attached together with other tire members, and vulcanized at 170°C for 15 minutes, thereby producing a test studless tire (tire size: 195/65R15).

The obtained vulcanized rubber compositions and test studless tires were stored in a dark place at room temperature for 3 months, and then evaluated as described below. The results are shown in Tables 1 to 3.

<On-Ice Performance>

Using the test studless tires, actual vehicle performance on ice was evaluated under the following conditions. The test was conducted at the Hokkaido Nayoro test course of Sumitomo Rubber Industries, Ltd., and the temperature was -1°C. The test tires were mounted to an FR car produced in Japan with an engine displacement of 2000 cc, and the stop distance on ice required until the car stopped when the lock brake was depressed at a speed of 30 km/h was measured. An index was calculated from the following equation with Comparative Example 1 as a reference in Table 1, with Comparative Example 11 as a reference in Table 2, and with Comparative Example 21 as a reference in Table 3. A higher index indicates that the on-ice performance is better.

$$\text{(On-ice performance)} = \text{(braking stop distance of reference)} / \text{(stop distance for each blending formula)} \times 100$$

<Wet Grip Performance>

The test studless tires were mounted to all the wheels of a vehicle (an FF car produced in Japan with an engine displacement of 2000 cc), and a braking distance from an initial speed of 100 km/h on a wet asphalt road surface was obtained. The braking distance for each blending formula is indicated as an index with the braking distance of a reference comparative example (Comparative Example 21) being regarded as 100. A higher index indicates that the wet grip performance is better.

<Wear Resistance>

For the vulcanized rubber compositions, a wear amount was measured using a Lambourn abrasion tester manufactured by Iwamoto Seisakusho under the conditions of a surface rotation speed of 50 m/min, an applied load of 3.0 kg, a falling sand amount of 15 g/min, and a slip rate of 20%, and the reciprocal of the wear amount was calculated. With the reciprocal of the wear amount of Comparative Example 1 being regarded as 100 in Table 1, with the reciprocal of the wear amount of Comparative Example 11 being regarded as 100 in Table 2, and with the reciprocal of the wear amount of Comparative Example 21 being regarded as 100 in Table 3, the reciprocals of the wear amounts for the other blending formulas are indicated as indexes. A higher index indicates that the wear resistance is better.

<Combined Performance>

In Tables 1 and 2, the sum of the indexes of on-ice performance and wear resistance was evaluated as combined performance. In Table 3, the sum of the indexes of on-ice performance, wet grip performance, and wear resistance was evaluated as combined performance.

<Tread Maximum Thickness>

When the maximum thickness (the maximum value of the total thickness of the cap layer and the base layer) of the tread of the test studless tire of Example 24 was measured, the maximum thickness was 5.5 mm.

[Table 1]

| | | Example 1 | Example 2 | Example 3 | Example 4 | Example 5 | Comparative Example 1 | Comparative Example 2 |
|---|---|---|---|---|---|---|---|---|
| Blending amount (parts by mass) | NR | 50 | 50 | 50 | 50 | 50 | 50 | 50 |
| | BR | 50 | 50 | 50 | 50 | 50 | 50 | 50 |
| | Carbon black | 5 | 5 | 5 | 5 | 5 | 5 | 5 |
| | Silica | 70 | 70 | 70 | 70 | 70 | 70 | 70 |
| | Silane coupling agent | 8 | 8 | 8 | 8 | 8 | 8 | 8 |
| | Water-soluble particles A [D50 =10 μm] | 35 | - | 25 | - | 5 | - | - |
| | Water-soluble particles B [D50 = 30 μm] | - | 25 | - | - | - | - | - |
| | Water-soluble particles C [D50 = 100 μm] | - | - | - | - | - | 25 | - |
| | Water-soluble particles D [D50 = 150 μm] | - | - | - | - | - | - | 25 |
| | Water-soluble particles E [D50 = 20 μm] | - | - | - | 25 | - | - | - |
| | Wax | 1 | 1 | 1 | 1 | 1 | 1 | 1 |
| | Antioxidant | 2 | 2 | 2 | 2 | 2 | 2 | 2 |
| | Oil | 30 | 30 | 30 | 30 | 30 | 30 | 30 |
| | Stearic acid | 1 | 1 | 1 | 1 | 1 | 1 | 1 |
| | Zinc oxide | 1.5 | 1.5 | 1.5 | 1.5 | 1.5 | 1.5 | 1.5 |
| | Sulfur | 1 | 1 | 1 | 1 | 1 | 1 | 1 |
| | Vulcanization accelerator | 2 | 2 | 2 | 2 | 2 | 2 | 2 |
| Evaluation | On-ice performance (-1°C) | 113 | 104 | 106 | 105 | 101 | 100 | 98 |
| | Wear resistance | 106 | 111 | 115 | 113 | 131 | 100 | 95 |
| | Combined performance | 219 | 215 | 221 | 218 | 232 | 200 | 193 |

[Table 2]

| | | Example 11 | Example 12 | Example 13 | Example 14 | Example 15 | Comparative Example 11 | Comparative Example 12 |
|---|---|---|---|---|---|---|---|---|
| Blending amount (parts by mass) | NR | 40 | 40 | 40 | 40 | 40 | 40 | 40 |
| | BR | 60 | 60 | 60 | 60 | 60 | 60 | 60 |
| | Carbon black | 5 | 5 | 5 | 5 | 5 | 5 | 5 |
| | Silica | 70 | 70 | 70 | 70 | 70 | 70 | 70 |
| | Silane coupling agent | 8 | 8 | 8 | 8 | 8 | 8 | 8 |
| | Water-soluble particles A [D50 = 10 μm] | 35 | - | 25 | - | 5 | - | - |
| | Water-soluble particles B [D50 = 30 μm] | - | 25 | - | - | - | - | - |
| | Water-soluble particles C [D50 =100 μm] | - | - | - | - | - | 25 | - |
| | Water-soluble D [D50 = 150 μm] | - | - | - | - | - | - | 25 |
| | Water-soluble particles E [D50 = 20 μm] | - | - | - | 25 | - | - | - |
| | Wax | 1 | 1 | 1 | 1 | 1 | 1 | 1 |
| | Antioxidant | 2 | 2 | 2 | 2 | 2 | 2 | 2 |
| | Oil | 30 | 30 | 30 | 30 | 30 | 30 | 30 |
| | Stearic acid | 1 | 1 | 1 | 1 | 1 | 1 | 1 |
| | Zinc oxide | 1.5 | 1.5 | 1.5 | 1.5 | 1.5 | 1.5 | 1.5 |
| | Sulfur | 1 | 1 | 1 | 1 | 1 | 1 | 1 |
| | Vulcanization accelerator | 2 | 2 | 2 | 2 | 2 | 2 | 2 |
| Evaluation | On-ice performance (-1°C) | 114 | 105 | 107 | 105 | 101 | 100 | 98 |
| | Wear resistance | 106 | 113 | 114 | 114 | 129 | 100 | 96 |
| | Combined performance | 220 | 218 | 221 | 219 | 230 | 200 | 194 |

[Table 3]

| | | Example 21 | Example 22 | Example 23 | Example 24 | Comparative Example 21 |
|---|---|---|---|---|---|---|
| Blending amount (parts by mass) | NR | 30 | 30 | 30 | 30 | 30 |
| | BR | 20 | 20 | 20 | 20 | 20 |
| | SBR | 50 | 50 | 50 | 50 | 50 |
| | Carbon black | 5 | 5 | 5 | 5 | 5 |
| | Silica | 70 | - | 70 | 70 | 70 |
| | Particulate silica | - | 120 | - | - | - |
| | Silane coupling agent NXT | 8 | 8 | 8 | 8 | 8 |
| | Water-soluble particles A [D50 = 10 μm] | 35 | 35 | 35 | 35 | - |
| | Water-soluble particles B [D50 = 30 μm] | - | - | - | - | - |
| | Water-soluble particles C [D50 = 100 μm] | - | - | - | - | 25 |
| | Water-soluble particles D [D50 = 150 μm] | - | - | - | - | - |
| | Water-soluble particles E [D50 = 20 μm] | - | - | - | - | - |
| | Wax | 1 | 1 | 1 | 1 | 1 |
| | Antioxidant | 2 | 2 | 2 | 2 | 2 |
| | Oil | 30 | 30 | 30 | 30 | 30 |
| | Resin | - | - | 40 | - | - |
| | Stearic acid | 1 | 1 | 1 | 1 | 1 |
| | Zinc oxide | 1.5 | 1.5 | 1.5 | 1.5 | 1.5 |
| | Sulfur | 1 | 1 | 1 | 1 | 1 |
| | Vulcanization accelerator | 2 | 2 | 2 | 2 | 2 |
| Evaluation | On-ice performance (-1°C) | 116 | 110 | 113 | 110 | 100 |
| | Wet grip performance | 105 | 115 | 110 | 104 | 100 |
| | Wear resistance | 110 | 120 | 105 | 106 | 100 |
| | Combined performance | 331 | 345 | 328 | 320 | 300 |

As seen from Tables 1 to 3, combined performance of on-ice performance and wear resistance was improved in the Examples in each of which an isoprene-based rubber, a conjugated diene-based polymer, and water-soluble particles are contained and the water-soluble particles have a median particle size not greater than a predetermined value.

Provided are a rubber composition, for a tire, which allows combined performance of on-ice performance and wear resistance to be improved, and a tire in which the rubber composition is used. The rubber composition for a tire contains: a rubber component containing an isoprene-based rubber and a conjugated diene-based polymer; and water-soluble particle, and the water-soluble particles satisfy the following formula (I),

$$D50 \leq 30 \qquad (I)$$

(D50 in formula (I) represents a median particle size (μm) of the water-soluble particles.).

**Claims**

1. A rubber composition for a tire, containing: a rubber component containing an isoprene-based rubber and a conjugated diene-based polymer; and water-soluble particles, wherein the water-soluble particles satisfy the following formula (I),

$$D50 \leq 30 \qquad (I)$$

(D50 in formula (I) represents a median particle size (μm) of the water-soluble particles.).

2. The rubber composition for a tire according to claim 1, wherein the water-soluble particles satisfy a relationship of the following formula (II),

$$A/D50 \geq 0.5 \qquad (II)$$

(A in formula (II) represents an amount (parts by mass) of the water-soluble particles per 100 parts by mass of the rubber component. D50 represents the median particle size (μm) of the water-soluble particles.).

3. The rubber composition for a tire according to claim 1 or 2, wherein an amount of the water-soluble particles per 100 parts by mass of the rubber component is not less than 10 parts by mass.

4. The rubber composition for a tire according to any one of claims 1 to 3, wherein the amount of the water-soluble particles per 100 parts by mass of the rubber component is not less than 25 parts by mass.

5. The rubber composition for a tire according to any one of claims 1 to 4, wherein
an amount of the isoprene-based rubber in 100% by mass of the rubber component is not less than 20% by mass,
an amount of the conjugated diene-based polymer in 100% by mass of the rubber component is not less than 20% by mass, and
a silica content in 100% by mass of a total amount of silica and carbon black is not less than 50% by mass.

6. The rubber composition for a tire according to any one of claims 1 to 5,
wherein an amount of a liquid plasticizer per 100 parts by mass of the rubber component is not greater than 30 parts by mass.

7. The rubber composition for a tire according to any one of claims 1 to 6,
wherein the conjugated diene-based polymer includes a conjugated diene-based polymer having a cis content not less than 90% by mass.

8. The rubber composition for a tire according to any one of claims 1 to 7,
wherein the median particle size of the water-soluble particles is not less than 10 μm.

9. The rubber composition for a tire according to any one of claims 1 to 8,
wherein
the rubber component further contains a styrene-butadiene rubber, and
an amount of the styrene-butadiene rubber per 100 parts by mass of the rubber component is not less than the amount of the water-soluble particles per 100 parts by mass of the rubber component.

10. The rubber composition for a tire according to any one of claims 1 to 9, further containing particulate silica having a nitrogen adsorption specific surface area not less than 180 $m^2/g$, wherein
an amount of the particulate silica per 100 parts by mass of the rubber component is not less than the amount of the water-soluble particles per 100 parts by mass of the rubber component.

11. The rubber composition for a tire according to any one of claims 1 to 10, further containing a resin, wherein
an amount of the resin per 100 parts by mass of the rubber component is not less than the amount of the water-soluble particles per 100 parts by mass of the rubber component.

**12.** The rubber composition for a tire according to any one of claims 1 to 11, further containing a resin, wherein the resin is at least one resin selected from the group consisting of terpene-based resins, C5-based resins, and C9-based resins.

**13.** A tire comprising a member produced by using the rubber composition according to any one of claims 1 to 12.

**14.** The tire according to claim 13, wherein
the tire is a winter tire, and
the member is a tread (1).

**15.** The tire according to claim 14, wherein the tread (1) has a maximum thickness not less than 5.5 mm.

FIG. 1

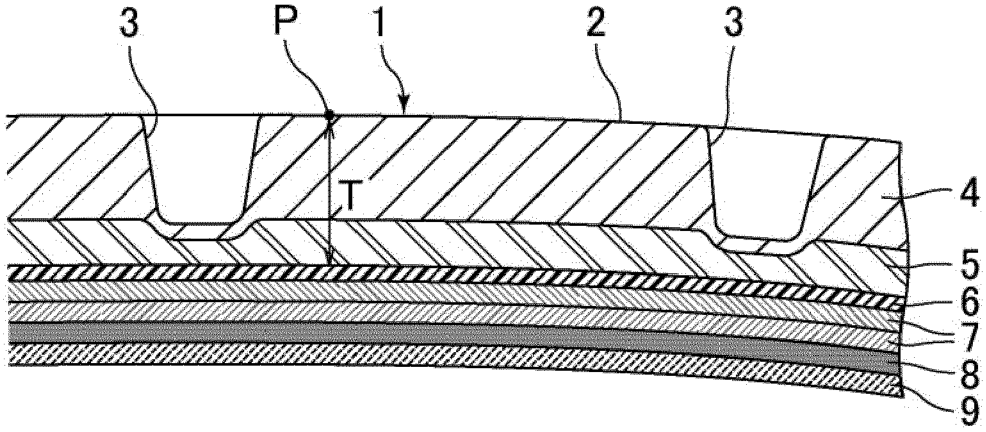

Europäisches Patentamt
European Patent Office
Office européen des brevets

# EUROPEAN SEARCH REPORT

Application Number
EP 20 17 2343

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | EP 3 575 355 A1 (SUMITOMO RUBBER IND [JP]) 4 December 2019 (2019-12-04) * paragraph [0157] - paragraph [0169] * * example 4; table 1 * * claims 1,3,4-7 * | 1-7, 10-14 | INV. C08L7/00 B60C1/00 B60C11/00 |
| X | US 2011/190416 A1 (MAESAKA MASAYUKI [JP] ET AL) 4 August 2011 (2011-08-04) * paragraph [0075] - paragraph [0080] * * claims * * paragraph [0026] - paragraph [0036] * | 1-15 | |
| X | US 2016/046781 A1 (MIYAZAKI TATSUYA [JP]) 18 February 2016 (2016-02-18) * comparative example 31; table 2 * | 1-7, 10-14 | |
| X | US 4 598 105 A (WEBER KENNETH E [US] ET AL) 1 July 1986 (1986-07-01) * examples 30, 31,35-41 * * claims * | 1-4,6, 11,13,14 | |

TECHNICAL FIELDS SEARCHED (IPC)
C08K
C08L
B60C

The present search report has been drawn up for all claims

1

| Place of search | Date of completion of the search | Examiner |
|---|---|---|
| Munich | 29 May 2020 | Russell, Graham |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 20 17 2343

This annex lists the patent family members relating to the patent documents cited in the above-mentioned European search report. The members are as contained in the European Patent Office EDP file on
The European Patent Office is in no way liable for these particulars which are merely given for the purpose of information.

29-05-2020

| Patent document cited in search report | Publication date | Patent family member(s) | Publication date |
|---|---|---|---|
| EP 3575355 A1 | 04-12-2019 | CN 110540687 A | 06-12-2019 |
| | | EP 3575355 A1 | 04-12-2019 |
| | | JP 2019206653 A | 05-12-2019 |
| | | US 2019366770 A1 | 05-12-2019 |
| US 2011190416 A1 | 04-08-2011 | CA 2730748 A1 | 28-01-2010 |
| | | CN 102099409 A | 15-06-2011 |
| | | EA 201170246 A1 | 31-10-2011 |
| | | EP 2307491 A1 | 13-04-2011 |
| | | FR 2934273 A1 | 29-01-2010 |
| | | JP 5592885 B2 | 17-09-2014 |
| | | JP 2011528735 A | 24-11-2011 |
| | | KR 20110030631 A | 23-03-2011 |
| | | US 2011190416 A1 | 04-08-2011 |
| | | WO 2010009850 A1 | 28-01-2010 |
| US 2016046781 A1 | 18-02-2016 | CN 105143335 A | 09-12-2015 |
| | | EP 2985311 A1 | 17-02-2016 |
| | | JP 5767753 B2 | 19-08-2015 |
| | | JP WO2014178232 A1 | 23-02-2017 |
| | | US 2016046781 A1 | 18-02-2016 |
| | | WO 2014178232 A1 | 06-11-2014 |
| US 4598105 A | 01-07-1986 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009091482 A
- JP 2005053977 A
- JP 2002249619 A
- US 4414370 A
- JP S596207 B
- JP H558005 B
- JP H1313522 B
- US 5010166 A